(19)

Europäisches
Patentamt

European
Patent Office

Office européen
des brevets

(11) **EP 3 666 859 B1**

(12) **EUROPEAN PATENT SPECIFICATION**

(45) Date of publication and mention
of the grant of the patent:
**02.03.2022 Bulletin 2022/09**

(21) Application number: **18211934.7**

(22) Date of filing: **12.12.2018**

(51) International Patent Classification (IPC):
**C10J 3/30** *(2006.01)*     **B01J 8/00** *(2006.01)*
**B65G 33/14** *(2006.01)*

(52) Cooperative Patent Classification (CPC):
**C10J 3/30; B01J 8/0045; B65G 33/14;
B65G 43/08;** B65G 2203/042; Y02P 20/145

(54) **SPEED CONTROLLED PLUG SCREW FEEDER**

GESCHWINDIGKEITSGESTEUERTER STOPFSCHNECKENFÖRDERER

ALIMENTATEUR À VIS TAMPON À VITESSE CONTRÔLÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2020 Bulletin 2020/25**

(73) Proprietor: **VALMET AB
851 94 Sundsvall (SE)**

(72) Inventor: **PETTERSSON, Patrik
865 32 Alnö (SE)**

(74) Representative: **Maiwald Patent- und
Rechtsanwaltsgesellschaft mbH
Elisenhof
Elisenstraße 3
80335 München (DE)**

(56) References cited:
**WO-A1-91/04371         WO-A1-2013/126007
WO-A1-2015/178828     US-A1- 2009 218 424
US-A1- 2011 033 268**

## Description

The present invention relates to a feeding arrangement for feeding biomass with a low material density to a treatment vessel, a system for treating said biomass comprising said feeding arrangement and a method for treating said biomass.

## Background of the invention

Feeding biomass into a treatment vessel can be carried out in different ways and is dependent on a number of factors such as the characteristics of the biomass and the possibly desired treatment of the biomass besides the actual feeding process. Plug screw feeders, in which a rotating screw transports the material forward, are commonly used as feeders for feeding biomass into a treatment vessel. At the same time as the biomass is fed into the treatment vessel, the screw and the corresponding screw pipe or housing also exercises a volumetric compression function. Such plug screw feeders are very commonly used for feeding wood chips to a digester or an impregnator. Commonly, such plug screw feeders also comprise a plug pipe at the end of the feeder with an essentially constant inner diameter. The compression takes place in that part of the plug screw feeder, which is essentially axial.

A known problem of plug screw feeders is that the theoretically possible compression of the biomass in the plug screw feeder is often not obtained. A solution to this problem may be to "force-feed" the plug screw, i.e. to make sure that the biomass is fed to the plug screw as such that a main part of the available volume in the screw housing is properly filled and thus can be compressed.

Especially difficult is feeding biomass with a low material density of not more than 200 kg/m$^3$, such as non-wood plant material, to a treatment vessel. The use of non-wood plants has recently become more and more important. In some applications the non-wood plants are used as fuel for generating heat. The non-wood plants can also be used for the production of pulp for papermaking purposes or the like, thereby replacing wood as source material. In many of these processes the non-wood plants are treated in a pressurized reactor, which imposes special requirements on the feeding arrangement.

WO 2013/126007 A1 discloses a feeding arrangement for non-wood plant material having a low material density to a treatment vessel which comprises a force-feeding screw and a plug screw feeder. The longitudinal axis of the force-feeding screw is arranged essentially perpendicular to the longitudinal axis of the plug screw of the plug screw feeder and the non-wood plant material is force-fed from the force-feeding screw to an inlet section of the plug screw feeder. By means of this feeding arrangement the material density of the non-wood plant material is sufficiently increased so that it can be fed into a pressurized treatment vessel.

The feeding arrangement of WO 2013/126007 A1, however, has the drawback that the bulky material of the non-wood plants tends to plug in the plug screw feeder especially when the non-wood plants are force-fed into the plug screw feeder at constant speed. In a worst-case scenario the plugging can cause breaking of the plug screw.

WO 2015/178828 A1 discloses a feeding arrangement for feeding comminuted material to a treatment stage using a plug screw feeder.

Therefore, there is a need for an improved feeding arrangement suitable for feeding bulky low density biomass and accordingly a system for the treatment of such biomass comprising such a feeding arrangement and a method for treating such biomass. In such an improved feeding arrangement plugging of the plug screw should be minimized or even be avoided.

It has been found that by controlling the load of biomass on the plug screw plugging of the plug screw should be minimized or even be avoided. The load thereby surprisingly can be controlled by monitoring at least one parameter related to the load of the force-feeding screw and adjusting the rotational speed of the plug screw in accordance with the changes of said at least one parameter.

## Summary of the invention

The present invention relates to a feeding arrangement for feeding biomass having a material density of not more than 200 kg/m$^3$ to a treatment vessel, the feeding arrangement comprising:

- a plug screw feeder for feeding the biomass to the treatment vessel, the plug screw feeder comprising a plug screw and a corresponding plug screw housing surrounding the plug screw;
- a force-feeding screw for feeding the biomass to the plug screw feeder and a corresponding force-feeding screw housing surrounding the force feeding screw; and
- a feeding device being arranged to feed incoming biomass to the force-feeding screw; wherein

  the force feeding screw is arranged to provide the biomass to an inlet section of the plug screw feeder;
  the longitudinal axis of the force-feeding screw is arranged essentially perpendicular to the longitudinal axis of the plug screw; and
  the plug screw is adapted to be able to be rotated at variable speed in relation to a production flow rate set by the feeding device;
  characterized in that the feeding arrangement further comprises

- a monitoring device configured to monitoring at least one parameter related to the load of the force-feeding screw, which is a parameter which is connected to the energy consumption of the force-feeding screw; and

- an adjustment device configured to adjusting the rotational speed of the plug screw to the at least one parameter related to the load of the force-feeding screw.

Further, the invention relates to a system for treating biomass having a material density of not more than 200 kg/m$^3$ comprising

- the feeding arrangement as defined above or below and
- a treatment vessel,

wherein the feeding arrangement is arranged to the treatment vessel as to feed the biomass into the treatment vessel.

Still further, the invention relates to a method for treating biomass having a material density of not more than 200 kg/m$^3$ comprising the steps of:

a) feeding the biomass from a feeding device to a force-feeding screw surrounded by a corresponding force-feeding housing;
b) feeding the biomass from the force-feeding screw to a plug screw feeder comprising a plug screw and a corresponding plug screw housing; and
c) feeding the biomass from the plug screw feeding to a treatment vessel;

wherein
the force feeding screw is arranged to provide the biomass to an inlet section of the plug screw feeder;
the longitudinal axis of the force-feeding screw is arranged essentially perpendicular to the longitudinal axis of the plug screw; and
the plug screw is adapted to be able to be rotated at variable speed in relation to a production flow rate set by the feeding device;
characterized in that

d) at least one parameter related to the load of the force-feeding screw, which is a parameter which is connected to the energy consumption of the force-feeding screw, is monitored; and
e) the rotational speed of the plug screw is adjusted to the at least one parameter related to the load of the force-feeding screw.

## Definitions

Biomass is any source of plant material suitable for converting into pulp and paper material, cellulose-based construction material or biofuel.

Non-wood plant material encompasses herbaceous plants, such as straw, bagasse, and wheat (bran and grain material), peat material and empty fruit bunches. In sort, the term "non-wood plant material" is used for all kinds of plants or plant parts containing material which is not defined as wood.

The material density is the density of the biomass in compressed or non-compressed state. This means that in addition to the usual definition of material density of a material at atmospheric pressure the definition of material density as used herein also encompasses bulk densities at pressures higher than atmospheric pressure (so-called overpressure).

The term "pressurized" means exceeding atmospheric pressure. E.g. "pressurized treatment vessel" means that the pressure in the treatment vessel exceeds atmospheric pressure.

"Longitudinal" is meant to be the direction along which a body or part has its greatest extension. When this term is used in connection with the axes of screws, the longitudinal axis corresponds to the rotational axis of the screw.

## Figures

Figure 1 shows a schematic cross-sectional top view illustrating an example system for treating non-wood pulp, comprising a feeding arrangement according to an exemplifying embodiment of the invention.
Figure 2 shows the power input of the plug screw (red) and the power input of the force-feeding screw (blue) at operation of the feeding arrangement at constant rotational speed of both the force-feeding screw and the plug screw feeder.

## Detailed Description

## Feeding arrangement

The present invention relates to a feeding arrangement for feeding biomass having a material density of not more than 200 kg/m$^3$ to a treatment vessel, the feeding arrangement comprising:

- a plug screw feeder for feeding the biomass to the treatment vessel, the plug screw feeder comprising a plug screw and a corresponding plug screw housing surrounding the plug screw;
- a force-feeding screw for feeding the biomass to the plug screw feeder and a corresponding force-feeding screw housing surrounding the force feeding screw; and
- a feeding device being arranged to feed incoming biomass to the force-feeding screw; wherein

the force feeding screw is arranged to provide the biomass to an inlet section of the plug screw feeder;

the longitudinal axis of the force-feeding screw is arranged essentially perpendicular to the longitudinal axis of the plug screw; and

the plug screw is adapted to be able to be rotated at variable speed in relation to a production flow rate set by the feeding device;

characterized in that the feeding arrangement further comprises

- a monitoring device configured to monitoring at least one parameter related to the load of the force-feeding screw, which is a parameter which is connected to the energy consumption of the force-feeding screw; and
- an adjustment device configured to adjusting the rotational speed of the plug screw feeder to the at least one parameter related to the load of the force-feeding screw.

Preferably, the at least one parameter related to the load of the force-feeding screw is a parameter which is connected to the energy consumption of the force-feeding screw. Thereby the energy consumption increases with increased load and vice versa.

Suitable parameters related to the load of the force-feeding screw are torque, current and/or energy consumption.

Usually, monitoring one parameter related to the load of the force-feeding screw is sufficient. However, also more than one parameter related to the load of the force-feeding screw, such as two parameters or three parameters, can be monitored.

The at least one parameter related to the load of the force-feeding screw is monitored constantly during the operation of the plug screw feeder. However, in certain embodiments the at least one parameter related to the load of the force-feeding screw can also monitored periodically, such as once over a period of time, e.g. once in a period of 30 seconds or 1 minute or 5 minutes or 10 minutes or 15 minutes, during the operation of the plug screw feeder.

The means for monitoring the at least one parameter related to the load of the force-feeding screw depend on the actually selected parameter(s) and are selected from the usual means for monitoring said selected parameter(s).

The rotational speed of the plug screw can be adjusted by any means suitable for adjusting the rotational speed of the plug screw.

In the feeding arrangement according to the invention the rotational speed of the plug screw is not predetermined before operation and then kept constant during the operation of the plug screw.

Instead the rotational speed of the plug screw feeder can be adjusted during operation of the plug screw, i.e. can be increased or reduced.

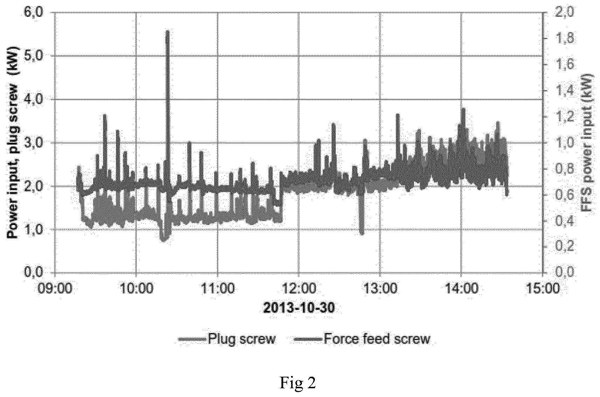

It has surprisingly been found that the power input of the force-feeding screw follows power input of the plug screw in a small time lag as can be seen from Figure 2. This finding shows that the operations of the plug screw and the force-feeding screw are connected to each other as such that they are influencing each other. Consequently, the load of the plug screw cannot only be influenced by intervening into the operation of the plug screw feeder but also by intervening into the operation of the force-feeding screw.

The rotational speed of the plug screw is adjusted to the at least one parameter related to the load of the force-feeding screw, i.e. the rotational speed of the plug screw feeder is reduced when the at least one parameter indicates an reduced load of the force-feeding screw and the rotational speed of the plug screw is increased when the at least one parameter indicates an increased load of the force-feeding screw.

In one embodiment of invention the means for adjusting the rotational speed of the plug screw is a manual means, meaning that the rotational speed of the plug screw is adjusted actively by an operating person, by e. g. pulling a switch, turning a knob, pushing a button or the like.

In another embodiment of invention the means for adjusting the rotational speed of the plug screw is a manual means, meaning that the rotational speed of the plug screw is automatically adjusted due to predetermined criteria without active intervention by an operating person.

In said latter embodiment the feeding arrangement preferably further comprises means for processing the data received from the monitoring device and controlling the adjustment device in dependence of the data received from the monitoring device.

The feeding arrangement for feeding the biomass comprises a plug screw feeder, a force-feeding screw and a feeding device as described in WO 2013/126007 A1 the disclosure of which is herewith incorporated in its entirety.

The feeding arrangement is suitable for feeding biomass having a material density of not more than 200 kg/m$^3$, preferably of 20 to 150 kg/m$^3$, more preferably of 30 to 120 kg/m$^3$ and most preferably of 40 to 90 kg/m$^3$.

The biomass is preferably non-wood plant material, more preferably non-wood pulp.

The force feeding screw and the corresponding force feeding screw housing can be any device suitable for force-feeding the biomass into the plug-screw feeder. Devices for force-feeding are known in the art and commercially available.

The force feeding screw is preferably arranged as such that the distance between an outermost point of a last screw thread of the force-feeding screw, seen in the direction of the longitudinal axis of the force feeding-screw to a point on the outer diameter of the plug screw at the inlet section of the plug screw feeder is 0-90 mm, more preferably 10 to 70 mm. By having such a comparatively small distance, it is ensured that the biomass from the force-feeding screw enters the plug screw feeder in a steady flow and is efficiently fed forward. Distances within the interval can be chosen in relation to the largest dimension of a particle of the biomass, the smaller the particle the shorter is the chosen distance.

According to one embodiment, the force-feeding screw is arranged essentially perpendicular to the plug screw, i.e. the rotational axis of the force-feeding screw is perpendicular to the rotational axis of the plug screw.

In another embodiment, the force-feeding screw is arranged in such a way that the biomass is fed to the plug screw feeder from the side, i.e. the biomass is fed to the plug screw feeder in a transverse feed in relation to its feeding direction.

The plug screw feeder can be any plug screw feeder suitable for feeding biomass. Plug screw feeders are known in the art and commercially available. Preferably, the inner diameter of the plug screw housing at the inlet of the plug screw feeder is bigger than the inner diameter of the plug screw housing at the outlet of the plug screw feeder. The decreasing inner diameter of the plug screw housing in the direction of the biomass flow creates a volumetric compression of the biomass in the plug screw feeder.

The biomass is fed to the force-feeding screw from a feeding device. The feeding device preferably sets a predetermined feed rate of biomass to the force-feeding screw, thereby setting the general production flow.

The feeding device can be any device suitable for feeding biomass to the force-feeding screw. Suitably, the feeding device is a pin drum feeder or a storage bin.

**System for treating biomass**

The present invention further relates to a system for treating biomass having a material density of not more than 200 kg/m$^3$ comprising

- the feeding arrangement as defined above or below and
- a treatment vessel,

wherein the feeding arrangement is arranged to the treatment vessel as to feed the biomass into the treatment vessel.

The biomass is preferably as defined above or below.

In the system according to the invention the biomass is preferably treated e.g. by addition of reactant chemical such as acid or other catalysts for catalysing hydrolysis as known in the art or are thermally treated e.g. in the presence of steam.

The treatment of the biomass is usually conducted in the treatment vessel.

Preferably, the treatment vessel is a pressurized treatment vessel, such as a pressurized reactor.

Preferably, the treatment vessel is a horizontal reactor.

When feeding the biomass into a pressurized treatment vessel the feeding arrangement must be adapted in such a way that a blow back of high-pressure steam or treatment media from the treatment vessel is avoided or at least minimized.

For such applications it is of outermost importance that the biomass in the plug screw is fully compressed to minimize the risk of a back flow of high pressure steam in the backwards direction of the feeding direction of the biomass.

**Method for treating biomass**

The present invention also relates to a method for treating biomass having a material density of not more than 200 kg/m$^3$ comprising the steps of:

a) feeding the biomass from a feeding device to a force-feeding screw surrounded by a corresponding force-feeding housing;
b) feeding the biomass from the force-feeding screw to a plug screw feeder comprising a plug screw and a corresponding plug screw housing; and
c) feeding the biomass from the plug screw feeding to a treatment vessel;

wherein
the force feeding screw is arranged to provide the biomass to an inlet section of the plug screw feeder;
the longitudinal axis of the force-feeding screw is arranged essentially perpendicular to the longitudinal axis of the plug screw; and
the plug screw is adapted to be able to be rotated at variable speed in relation to a production flow rate set by the feeding device;
characterized in that

d) at least one parameter related to the load of the force-feeding screw, which is a parameter which is connected to the energy consumption of the force-feeding screw, is monitored; and
e) the rotational speed of the plug screw is adjusted to the at least one parameter related to the load of the force feeding screw.

The method of the invention is preferably adapted to be conducted in the feeding arrangement and the system for treating biomass as described above and below.

The biomass is preferably as defined above or below.

As described above the at least one parameter related to the load of the force-feeding screw is a parameter which is connected to the energy consumption of the force-feeding screw. Thereby the energy consumption increases with increased load and vice versa.

Suitable parameters related to the load of the force-feeding screw are torque, current and/or energy consumption.

Usually, monitoring one parameter related to the load of the force-feeding screw is sufficient. However, also more than one parameter related to the load of the force-feeding screw, such as two parameters or three parameters, can be monitored.

Preferably, the at least one parameter related to the load of the force-feeding screw is monitored constantly during the operation of the plug screw feeder. However, in certain embodiments the at least one parameter related to the load of the force-feeding screw can also monitored periodically, such as once over a period of time, e.g. once in a period of 30 seconds or 1 minute or 5 minutes or 10 minutes or 15 minutes, during the operation of the plug screw feeder.

The rotational speed of the plug screw is adjusted to the at least one parameter related to the load of the force-feeding screw, i.e. the rotational speed of the plug screw is reduced when the at least one parameter indicates an increased load of the force-feeding screw and the rotational speed of the plug screw is increased when the at least one parameter indicates a reduced load of the force-feeding screw.

In one embodiment of invention the rotational speed of the plug screw is adjusted manually, meaning that the rotational speed of the plug screw is adjusted actively by an operating person, by e.g. pulling a switch, turning a knob, pushing a button or the like.

In another embodiment of invention the rotational speed of the plug screw is adjusted automatically, meaning that the rotational speed of the plug screw is automatically adjusted due to predetermined criteria without active intervention by an operating person.

Suitably, before the start of the biomass treatment a certain range of the at least one parameter related to the load of the force-feeding screw is predetermined in which the rotational speed of the plug screw is kept constant.

As soon as it is monitored that the at least one parameter is above or below said range the rotational speed of the plug screw is either adjusted automatically or the deviation of the at least one parameter from the predetermined range is indicated so that the rotational speed of the plug screw can be adjusted manually as discussed above.

As discussed above the force feeding screw is preferably arranged as such that the distance between an outermost point of a last screw thread of the force-feeding screw, seen in the direction of the longitudinal axis of the force feeding-screw to a point on the outer diameter of the plug screw at the inlet section of the plug screw feeder is 0-90 mm, more preferably 10 to 70 mm. By having such a comparatively small distance, it is ensured that the biomass from the force-feeding screw enters the plug screw feeder in a steady flow and is efficiently fed forward. Distances within the interval can be chosen in relation to the largest dimension of a particle of the biomass, the smaller the particle the shorter is the chosen distance.

According to one embodiment, the biomass is fed from the force-feeding screw to the plug screw feeder in essentially perpendicular direction.

In another embodiment, the biomass is fed from the force -feeding screw to the plug screw feeder in a transverse feed in relation to its feeding direction.

Preferably, the rotational speed of the plug screw is adjusted in relation to the production flow set by the flow of the biomass from the feeding device to the force-feeding screw.

Further, the rotational speed of the force-feeding screw is preferably set to a value which ensures that the force-feeding screw is not overly filled, i.e. does not exceed its maximum filling degree. More preferably, the rotational speed of the force-feeding screw is set to be run at overspeed, i.e. resulting in a comparatively low degree of filling. However, all biomass fed into the force-feeding screw is preferably fed, e.g. force-fed, into the plug screw feeder.

In the method of the invention, the material density of the biomass itself is preferably increased before being fed into the treatment vessel. By selecting a rather short distance from the last screw thread of the force-feeding screw to a point on the outermost diameter of the plug screw at the inlet section thereof, it is ensured that the biomass is efficiently fed forward in the plug screw feeder and compressed to a higher material density. The material density is additionally increased by adjusting the rotational speed of the plug screw in relation to the production flow. By increasing the material density of the biomass an essentially gas- and fluid-tight plug is formed, which minimizes the risk for backflow of steam or other treatment media from the treatment vessel in the backwards direction of the flow direction of the biomass.

In the method of the present invention the formation of said essentially gas- and fluid-tight plug is further influenced by the monitoring of at least one parameter related to the load of the force-feeding screw and adjusting the rotational speed of the plug screw. These measures ensure that the density of said plug is controlled as such that the plug cannot cause clogging of the plug screw feeder and as a worst-case scenario the breaking of the plug screw.

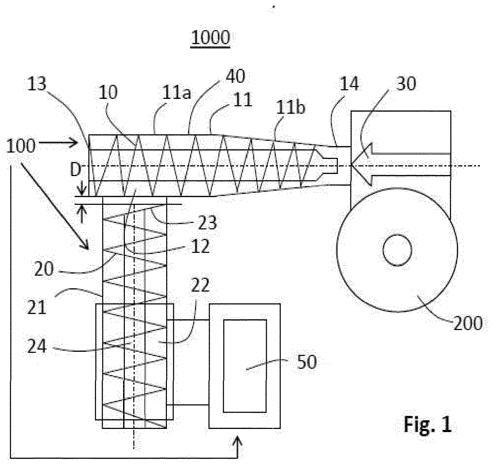

**Reference signs in figure 1:**

| 1000 | feeding system |
|------|----------------|
| 200  | treatment vessel |
| 100  | feeding arrangement |
| 40   | plug screw feeder |
| 10   | plug screw |
| 11   | plug screw housing |

| | |
|---|---|
| 11a | first plug screw housing part |
| 11b | screw pipe |
| 12 | inlet section of the plug screw feeder 40 |
| 13 | first end of the plug screw 10 |
| 14 | plug screw pipe |
| 20 | force-feeding screw |
| 21 | force-feeding screw housing |
| 23 | last screw thread of force-feeding screw 20 |
| 24 | shaft of force-feeding screw 20 |
| 30 | plug breaker device |
| 50 | feeding device |
| D | distance between the last screw thread 23 of the force-feeding screw 20 and the plug screw 10 |

**Detailed description of the figures**

Figure 1 is a schematic cross-sectional top view illustrating an example system for treating non-wood pulp, comprising a feeding arrangement according to an exemplifying embodiment of the invention. The general system is described in detail in WO 2013/126007.

The system comprises a feeding arrangement for feeding biomass to a treatment vessel. The feeding arrangement comprises a force-feeding screw disposed within a force-feeding screw housing and a plug screw feeder. The plug screw feeder comprises a plug screw disposed within a plug screw housing and a subsequent plug pipe. The plug screw housing comprises at least two parts, a first screw housing part and a screw pipe. The screw pipe has a somewhat decreasing diameter in order to create a volumetric compression, while the plug pipe has an essentially constant diameter in which mainly an axial compression takes place. The plug screw may reach into at least a part of the plug pipe so that the plug pipe can thus be considered as a part of the plug screw housing surrounding the plug screw. The force-feeding screw and its housing are arranged as such that the rotational axis of the force-feeding screw is essentially perpendicular to the rotational axis of the plug screw an its housing so that the biomass is fed to the plug screw form the side to an inlet section of the plug screw feeder. In the illustrated embodiment the inlet section is in the region of a first end of the plug screw. It should, however, be noted that the inlet section may also be placed at a location further downstream, in the feeding direction of the plug screw.

The force feeding screw is arranged to be rotatable at variable rotational speeds. The plug screw is also arranged to be rotatable at variable speed. The speeds of the plug screw and the force-feeding screw generally can be variated independently from each other. The force-feeding screw is preferably arranged to be run at overspeed, i.e. at a speed resulting in a low degree of filling. In any case, the rotational speed should be high enough to avoid overfilling of the force-feeding screw. According to one embodiment the force-feeding screw and associated housing can be a plug screw feeder performing a pre-compression.

The feeding arrangement further comprises a feeding device feeding material into the force-feeding screw. The feeding device sets a predetermined rate of biomass flow, i.e. the production flow. The rotational speed of the plug screw is then set in relation to the predetermined rate of the biomass flow in order to achieve a predetermined material density increase of the biomass in the plug screw. The feeding device may e.g. be a conveyer belt, pin drum feeder or a storage bin. If the production flow is increased, the rotational speed of the plug screw also has to be increased to obtain the same material density increase of the biomass in the plug screw feeder. If the rotational speed of the plug screw is maintained while the production flow increases, the material density of the biomass in the plug screw feeder will increase. By increasing the material density of the biomass in the plug screw feeder an essentially gas-and fluid-tight plug flow of the biomass is created through the plug screw feeder.

In one embodiment the feeding device is a so-called pin drum feeder. A pin drum feeder comprises two drums equipped with protruding pins, the drums being arranged to co-rotate with respect to each other in order to transport the biomass forward (i.e. in a downward direction). The pin drum feeder is considered to be the "gas pedal" of the system, controlling the production capacity. When the force-feeding screw is arranged to be run at overspeed, the production flow may not be controlled by adjusting the speed of the force-feeding screw. The pin drum feeder thus ensures that an adequate amount of biomass is supplied to the force-feeding screw. The pin drum feeder is especially suitable in connection with straw and bagasse and similar type biomass which a longitudinal dimension by far exceeding its traverse dimension.

In an embodiment in which the force-feeding screw is a plug screw feeder, said plug screw feeder may be operated in such a way as to replace the feeding device in its function as a "gas pedal".

The plug screw and the force-feeding screw are preferably arranged perpendicular to each other, i.e. having their respective rotational axes perpendicular to each other. In a preferred embodiment, they are arrange with their respective rotational axes essentially in the same horizontal plane so that the biomass is fed to the plug screw feeder from the side. Preferably, the inlet section is located close to a first end of the plug screw, the first end being the one furthest away from the treatment vessel.

The force-feeding screw and the plug screw feeder are preferably arranged as such that the distance D between an outermost point of a last screw thread of the force-feeding screw, seen in the direction of the longitudinal axis of the force feeding-screw to a point on the outer diameter of the plug screw at the inlet section of the plug screw feeder is 0-90 mm, preferably 10-70 mm. The end of the threaded section of the force-feeding screw preferably coincides with the end of the axle or shaft of the force-feeding screw. It is also preferred that the screw pipe surrounding the force-feeding screw has an extension corresponding to the extension of the screw.

The distance D between the force-feeding screw and the plug screw is to be chosen in relation to the particle size and the characteristics of the biomass, such as its ability to agglomerate. The hydraulic diameter, i.e. the ratio between the particle volume and its area, is one of the parameter that may be used for determining the distance D for a specific biomass material. Another suitable parameter for determining the distance D is the largest dimension of the particles of the biomass.

The particle dimensions may range in the interval of 5 to 50 mm for a material with an average dimension of the particles being at the lower range of the interval a distance D in the lower range of the interval of 0-90 mm is chosen. The average dimension L in this respect is defined as the "length weighted average particle length" according to the below formula

$$L(l) = \sum\left(l_i^2 \cdot n_i\right) / \sum\left(l_i \cdot n_i\right)$$

where $l_i$ is the average dimension of a particle l ad n is the number of particles i.

When e.g. feeding straw with a relatively large average dimension of about 15 mm a distance D of 70 mm was used, while when feeding peat, a plant material with a relatively small average dimension of about 1 mm, a distance D of 10 mm was used.

In case the distance D is too long for the specific biomass material the biomass material will not be "pulled along" by the plug screw, which will obstruct the biomass flow in the feeding arrangement.

The feeding arrangement of the system in Figure 2 further comprises a sensor for measuring the torque of the plug screw. The torque of the plug screw is one suitable parameter which correlates to the load of the plug screw. An increase of the torque of the plug screw indicates an increase of its load and vice versa. The torque of the plug screw is suitably monitored constantly during the operation of the plug screw feeder. In certain embodiments the torque of the plug screw can also monitored periodically, such as once over a period of time, e.g. once in a period of 30 seconds or 1 minute or 5 minutes or 10 minutes or 15 minutes, during the operation of the plug screw feeder.

Suitable other parameters related to the load of the plug screw are current and/or energy consumption.

The torque behaviour during operation of the force-feeding screw is processed by a CPU which compares the values with a predetermined range for the torque. As long as the torque values remain in the predetermined range the rotational speed of the plug screw is kept constant. However, as soon as the torque values leave said predetermined range the CPU automatically actuates the motor of the plug screw feeder as to adjust the speed of the force-feeding screw. When the torque value exceeds its predetermined range, i.e. the load of the force-feeding screw increases, the rotational speed of the plug screw is increased. Consequently, when the torque value falls below its predetermined range, i.e. the load of the force-feeding screw decreases, the rotational speed of the plug screw is reduced.

Besides said automated routine of adjusting the rotational speed of the plug screw, also less sophisticated routines are possible.

As an alternative the leaving of the torque value from its predetermined range can also only been indicated in a suitable way such as acoustically or by means of a flashing light. The rotational speed of the plug screw is then adjusted manually by an operating person.

By means of adjusting the rotational speed of the plug screw to the torque of the force-feeding screw it is ensured that the load of the plug screw does not increase excessively to such an extent that the material density of the biomass in the plug screw feeder does not increase to such an extent as to clog the plug screw feeder or in the worst-case scenario break the plug screw. Consequently, a smoother operation with less downtimes are obtained.

Illustrated in the system in Figure 1 is further a plug breaker device at the outlet of the plug screw feeder after the plug pipe. It should be noted that this device has an important safety function by acting as a check valve in the event that the plug should be lost, i.e. the biomass flow is not behaving as a plug. The force form the plug breaker also influences the axial compression and thus the material density of the biomass in the plug screw feeder. The higher the plug breaker pressure, the higher is the material density of the biomass in the plug screw feeder.

The biomass is transported by the rotation of the plug screw though the plug screw feeder towards the treatment vessel. The treatment vessel may be a reactor suitable for the desired treatment, such as e.g. a digester or a horizontal reactor. The reactor may be pressurized. Preferably, the reactor operates at an overpressure of 4 to 40 bars, i.e. 5 to 41 bars absolute pressure. One type of horizontal reactors especially suitable for biomass with a low material density such as non-wood plant material comprises a rotating screw, disposed within an essentially cylindrical housing, conveying the biomass towards the discharge end of the reactor.

The feeding arrangement is especially advantageous when feeding biomass to a pressurized reactor, since the gas and fluid tight plug created by the increase of material density of the biomass in the plug screw feeder minimizes the risk of backflow of steam or other reactant chemicals from the reactor. Due to the higher compression ratio, it is possible to feed against a higher pressure in the reactor.

## Claims

1. A feeding arrangement (100) for feeding biomass having a material density of not more than 200 kg/m$^3$ to a treatment vessel (200), the feeding arrangement (100) comprising:

   • a plug screw feeder (40) for feeding the biomass to the treatment vessel (200), the plug screw feeder (40) comprising a plug screw (10) and a corresponding plug screw housing (11) surrounding the plug screw (10);
   • a force-feeding screw (20) for feeding the biomass to the plug screw feeder (40) and a corresponding force-feeding screw housing (21) surrounding the force feeding screw (20); and
   • a feeding device (50) being arranged to feed incoming biomass to the force-feeding screw (20);

   wherein
   the force feeding screw (20) is arranged to provide the biomass to an inlet section (12) of the plug screw feeder (40);
   the longitudinal axis of the force-feeding screw (20) is arranged essentially perpendicular to the longitudinal axis of the plug screw (10); and
   the plug screw (10) is adapted to be able to be rotated at variable speed in relation to a production flow rate set by the feeding device (50);
   **characterized in that** the feeding arrangement (100) further comprises

   • a monitoring device configured to monitoring at least one parameter related to the load of the force-feeding screw (20), which is a parameter which is connected to the energy consumption of the force-feeding screw; and
   • an adjustment device configured to adjusting the rotational speed of the plug screw (10) to the at least one parameter related to the load of the force-feeding screw.

2. The feeding arrangement according to claim 1, wherein the at least one parameter related to the load of the force-feeding screw (20) is selected from torque, current and/or energy consumption.

3. The feeding arrangement according to claims 1 or 2 further comprising means for processing the data received from the monitoring device and controlling the adjustment device in dependence of the data received from the monitoring device.

4. The feeding arrangement according to any one of the preceding claims, wherein the distance (D) between an outermost point of a last screw thread (23) of the force-feeding screw (20), seen in the direction of the longitudinal axis of the force feeding-screw (20) to a point on the outer diameter of the plug screw (10) at the inlet section (12) of the plug screw feeder (40) is 0-90 mm.

5. The feeding arrangement according to any one of the preceding claims, wherein the force feeding screw (20) is arranged essentially in the same horizontal plane as the plug screw (10), the force feeding screw (20) feeding the material from the side.

6. The feeding arrangement according to any one of the preceding claims, wherein the feeding device (50) is a pin drum feeder.

7. A system (1000) for treating biomass having a material density of not more than 200 kg/m$^3$ comprising

   • the feeding arrangement (100) according to any one of the preceding claims and
   • a treatment vessel (200),

   wherein the feeding arrangement (100) is arranged to the treatment vessel (200) as to feed the biomass into the treatment vessel (200).

8. The system according to claim 7, wherein the treatment vessel (200) is a pressurized treatment vessel.

9. The system according to claims 7 or 8, wherein the treatment vessel (200) is a digester.

10. The system according to any one of claims 7 to 9, wherein the treatment vessel (200) is a horizontal reactor.

11. A method for treating biomass having a material density of not more than 200 kg/m$^3$ comprising the steps of:

   a) feeding the biomass from a feeding device to a force-feeding screw surrounded by a corresponding force-feeding housing;
   b) feeding the biomass from the force-feeding screw to a plug screw feeder comprising a plug screw and a corresponding plug screw housing; and
   c) feeding the biomass from the plug screw feeding to a treatment vessel;

   wherein
   the force feeding screw is arranged to provide the biomass to an inlet section of the plug screw feeder;
   the longitudinal axis of the force-feeding screw is arranged essentially perpendicular to the longitudinal axis of the plug screw; and

the plug screw is adapted to be able to be rotated at variable speed in relation to a production flow rate set by the feeding device; **characterized in that**

d) at least one parameter related to the load of the force-feeding screw, which is a parameter which is connected to the energy consumption of the force-feeding screw, is monitored; and

e) the rotational speed of the plug screw is adjusted to the at least one parameter related to the load of the force-feeding screw.

12. The method according to claim 11, wherein the at least one parameter related to the load of the force-feeding screw is selected from torque, current and/or energy consumption.

13. The method according to claims 11 and 12, wherein the rotational speed of the plug screw is reduced when the load of the force-feeding screw increases and the rotational speed of the plug screw is increased when the load of the force-feeding screw is reduced.

14. The method according to any one claims 11 to 13, wherein the distance between an outermost point of a last screw thread of the force-feeding screw, seen in the direction of the longitudinal axis of the force feeding-screw to a point on the outer diameter of the plug screw at the inlet section of the plug screw feeder is 0-90 mm.

**Patentansprüche**

1. Eine Zuführungsanordnung (100) zum Zuführen von Biomasse mit einer Materialdichte von nicht mehr als 200 kg/m³ zu einem Behandlungsbehälter (200), wobei die Zuführungsanordnung (100) umfasst:

    • eine Pfropfenschneckenzuführung (40) zum Zuführen der Biomasse zu dem Behandlungsbehälter (200), wobei die Pfropfenschneckenzuführung (40) eine Pfropfenschnecke (10) und ein entsprechendes Pfropfenschneckengehäuse (11), das die Pfropfenschnecke (10) umgibt, umfasst;
    • eine Förderschnecke (20) zum Zuführen der Biomasse zur Pfropfenschneckenzuführung (40) und ein entsprechendes Förderschneckengehäuse (21), das die Förderschnecke (20) umgibt; und
    • eine Zuführungsvorrichtung (50), die so angeordnet ist, dass sie die eintreffende Biomasse der Förderschnecke (20) zuführt;

wobei
die Förderschnecke (20) so angeordnet ist, dass sie die Biomasse zu einem Einlassabschnitt (12) der Pfropfenschneckenzuführung (40) liefert;
die Längsachse der Förderschnecke (20) im Wesentlichen senkrecht zur Längsachse der Pfropfenschnecke (10) angeordnet ist; und
die Pfropfenschnecke (10) mit variabler Geschwindigkeit in Abhängigkeit von einem durch die Zuführungsvorrichtung (50) eingestellten Produktionsdurchsatz gedreht werden kann;
**dadurch gekennzeichnet, dass** die Zuführungsanordnung (100) ferner umfasst

• eine Überwachungsvorrichtung, die so konfiguriert ist, dass sie mindestens einen Parameter überwacht, der mit der Belastung der Förderschnecke (20) zusammenhängt, wobei es sich um einen Parameter handelt, der mit dem Energieverbrauch der Förderschnecke verbunden ist; und
• eine Einstellvorrichtung, die so konfiguriert ist, dass sie die Drehgeschwindigkeit der Pfropfenschnecke (10) an den mindestens einen Parameter anpasst, der mit der Belastung der Förderschnecke zusammenhängt.

2. Die Zuführungsanordnung nach Anspruch 1, wobei der mindestens eine auf die Belastung der Förderschnecke (20) bezogene Parameter ausgewählt ist aus Drehmoment, Strom und/oder Energieverbrauch.

3. Die Zuführungsanordnung nach Anspruch 1 oder 2, die außerdem Mittel zur Verarbeitung der von der Überwachungsvorrichtung empfangenen Daten und zur Steuerung der Einstellvorrichtung in Abhängigkeit von den von der Überwachungsvorrichtung empfangenen Daten umfasst.

4. Die Zuführungsanordnung nach einem der vorhergehenden Ansprüche, wobei der Abstand (D) zwischen einem äußersten Punkt eines letzten Schraubengewindes (23) der Förderschnecke (20), in Richtung der Längsachse der Förderschnecke (20) gesehen, zu einem Punkt auf dem Außendurchmesser der Pfropfenschnecke (10) am Einlassabschnitt (12) der Pfropfenschneckenzuführung (40) 0-90 mm beträgt.

5. Die Zuführungsanordnung nach einem der vorhergehenden Ansprüche, wobei die Förderschnecke (20) im Wesentlichen in der gleichen horizontalen Ebene wie die Pfropfenschnecke (10) angeordnet ist, wobei die Förderschnecke (20) das Material von der Seite zuführt.

6. Die Zuführungsanordnung nach einem der vorhergehenden Ansprüche, wobei die Zuführungsvorrichtung (50) ein Stiftzuführer ist.

7. Ein System (1000) zur Behandlung von Biomasse mit einer Materialdichte von nicht mehr als 200 kg/m$^3$, umfassend

   • die Zuführungsanordnung (100) nach einem der vorhergehenden Ansprüche und
   • ein Behandlungsgefäß (200),

   wobei die Zuführungsanordnung (100) so am Behandlungsgefäß (200) angeordnet ist, dass sie die Biomasse in das Behandlungsgefäß (200) einspeist.

8. Das System nach Anspruch 7, wobei das Behandlungsgefäß (200) ein Druckbehandlungsgefäß ist.

9. Das System nach Anspruch 7 oder 8, wobei das Behandlungsgefäß (200) ein Fermenter ist.

10. Das System nach einem der Ansprüche 7 bis 9, wobei das Behandlungsgefäß (200) ein horizontaler Reaktor ist.

11. Ein Verfahren zur Behandlung von Biomasse mit einer Materialdichte von nicht mehr als 200 kg/m$^3$, umfassend die folgenden Schritte:

   a) Zuführung der Biomasse von einer Zuführungsvorrichtung zu einer Förderschnecke, die von einem entsprechenden Förderschneckengehäuse umgeben ist;
   b) Zuführen der Biomasse von der Förderschnecke zu einer Pfropfenschneckenzuführung mit einer Pfropfenschnecke und einem entsprechenden Pfropfenschneckengehäuse; und
   c) Einspeisung der Biomasse aus der Pfropfenschneckenzuführung in ein Behandlungsgefäß;

      wobei
      die Förderschnecke so angeordnet ist, dass sie die Biomasse zu einem Einlassabschnitt der Pfropfenschneckenzuführung führt;
      die Längsachse der Pfropfenschnecke im Wesentlichen senkrecht zur Längsachse der Förderschnecke angeordnet ist; und
      die Förderschnecke so ausgelegt ist, dass sie mit variabler Geschwindigkeit in Abhängigkeit von einem durch die Zuführungsvorrichtung eingestellten Produktionsdurchsatz gedreht werden kann;
      **dadurch gekennzeichnet, dass**

   d) mindestens ein mit der Belastung der Förderschnecke zusammenhängender Parameter, der mit dem Energieverbrauch der Förderschnecke verbunden ist, überwacht wird; und
   e) die Drehgeschwindigkeit der Pfropfenschnecke an den mindestens einen Parameter angepasst wird, der mit der Belastung der Förderschnecke zusammenhängt.

12. Das Verfahren nach Anspruch 11, wobei der mindestens eine Parameter, der sich auf die Belastung der Förderschnecke bezieht, aus Drehmoment, Strom und/oder Energieverbrauch ausgewählt ist.

13. Das Verfahren nach den Ansprüchen 11 und 12, wobei die Drehzahl der Pfropfenschnecke verringert wird, wenn die Belastung der Förderschnecke zunimmt, und die Drehzahl der Pfropfenschnecke erhöht wird, wenn die Belastung der Förderschnecke verringert wird.

14. Das Verfahren nach einem der Ansprüche 11 bis 13, wobei der Abstand zwischen einem äußersten Punkt eines letzten Schraubengewindes der Förderschnecke, in Richtung der Längsachse der Förderschnecke gesehen, und einem Punkt auf dem Außendurchmesser der Pfropfenschnecke am Einlassabschnitt der Pfropfenschneckenzuführung 0-90 mm beträgt.

**Revendications**

1. Dispositif d'alimentation (100) pour alimenter en biomasse ayant une densité de matériau non supérieure à 200 kg/m$^3$ un contenant de traitement (200), le dispositif d'alimentation (100) comprenant :

   • un alimenteur à vis tampon (40) pour alimenter le contenant (200) avec la biomasse, l'alimenteur à vis tampon (40) comprenant une vis tampon (10) et un carter de vis tampon correspondant (11) entourant la vis tampon (10) ;
   • une vis d'alimentation forcée (20) pour alimenter avec la biomasse l'alimenteur à vis tampon (40) et un carter de vis d'alimentation forcée correspondant (21) entourant la vis d'alimentation forcée (20) ; et
   • un appareil d'alimentation (50) étant disposé pour alimenter en biomasse entrante la vis d'alimentation forcée (20).

      dans lequel
      la vis d'alimentation forcée (20) est arrangée pour fournir la biomasse à une section d'entrée (12) de l'alimenteur à vis tampon (40) ;
      l'axe longitudinal de la vis d'alimentation forcée (20) est arrangé sensiblement perpendiculairement à l'axe longitudinal de la vis tampon (10) ; et
la vis tampon (10) est adaptée pour pouvoir être tournée à une vitesse variable en relation avec un débit de production réglé par l'appareil d'alimentation (50) ; **caractérisé en ce que** le dispositif d'alimentation (100) comprend en outre

• un appareil de surveillance configuré pour surveiller au moins un paramètre relatif à la charge de la vis d'alimentation forcée (20), qui est un paramètre qui est lié à la consommation d'énergie de la vis d'alimentation forcée ; et
• un appareil d'ajustement configuré pour ajuster la vitesse de rotation de la vis tampon (10) au au moins un paramètre relatif à la charge de la vis d'alimentation forcée.

2. Dispositif d'alimentation selon la revendication 1, dans lequel le au moins un paramètre relatif à la charge de la vis d'alimentation forcée (20) est sélectionné parmi un couple, un courant et/ou une consommation d'énergie.

3. Dispositif d'alimentation selon les revendications 1 ou 2 comprenant en outre des moyens pour traiter les données reçues depuis l'appareil de surveillance et commander l'appareil d'ajustement en fonction des données reçues depuis l'appareil de surveillance.

4. Dispositif d'alimentation selon l'une quelconque des revendications précédentes, dans lequel la distance (D) entre un point extérieur extrême d'un dernier filet de vis (23) de la vis d'alimentation forcée (20), vue dans la direction de l'axe longitudinal de la vis d'alimentation forcée (20) et un point sur le diamètre extérieur de la vis tampon (10) à la section d'entrée (12) de l'alimenteur à vis tampon (40) est de 0-90 mm.

5. Dispositif d'alimentation selon l'une quelconque des revendications précédentes, dans lequel la vis d'alimentation forcée (20) est disposée sensiblement dans le même plan horizontal que la vis tampon (10), la vis d'alimentation forcée (20) amenant le matériau de l'extérieur.

6. Dispositif d'alimentation selon l'une quelconque des revendications précédentes, dans lequel l'appareil d'alimentation (50) est un alimenteur à tambour et picots.

7. Système (1000) pour traiter de la biomasse ayant une densité de matériau non supérieure à 200 kg/m$^3$ comprenant :

• le dispositif d'alimentation (100) selon l'une quelconque des revendications précédentes et
• un contenant de traitement (200),

dans lequel le dispositif d'alimentation (100) est disposé sur le contenant de traitement (200) de manière à alimenter le contenant de traitement (200) avec la biomasse.

8. Système selon la revendication 7, dans lequel le contenant de traitement (200) est un contenant de traitement sous pression.

9. Système selon les revendications 7 ou 8, dans lequel le contenant de traitement (200) est un digesteur.

10. Système selon l'une quelconque des revendications 7 à 9, dans lequel le contenant de traitement (200) est un réacteur horizontal.

11. Procédé pour traiter de la biomasse ayant une densité de matériau non supérieure à 200 kg/m$^3$ comprenant les étapes :

a) alimenter avec la biomasse provenant d'un appareil d'alimentation une vis d'alimentation forcée entourée par un carter de vis d'alimentation forcée correspondant ;
b) alimenter avec la biomasse provenant de la vis d'alimentation forcée un alimenteur à vis tampon comprenant une vis tampon et un carter de vis tampon correspondant ; et
c) alimenter avec la biomasse provenant de l'alimentation par vis tampon un contenant de traitement ;

dans lequel

la vis d'alimentation forcée est arrangée pour fournir la biomasse à une section d'entrée de l'alimenteur à vis tampon ;
l'axe longitudinal de la vis d'alimentation forcée est arrangé sensiblement perpendiculairement à l'axe longitudinal de la vis tampon ; et
la vis tampon est adaptée pour pouvoir être tournée à une vitesse variable en relation avec un débit de production réglé par l'appareil d'alimentation ;
**caractérisé en ce que**
d) au moins un paramètre relatif à la charge de la vis d'alimentation forcée, qui est un paramètre qui est lié à la consommation d'énergie de la vis d'alimentation forcée, est surveillé ; et
e) la vitesse de rotation de la vis tampon est ajustée au au moins un paramètre relatif à la charge de la vis d'alimentation forcée.

12. Procédé selon la revendication 11, dans lequel le au moins un paramètre relatif à la charge de la vis d'alimentation forcée est sélectionné parmi un couple, un courant et/ou une consommation d'énergie.

13. Procédé selon les revendications 11 et 12, dans lequel la vitesse de rotation de la vis tampon est réduite quand la charge de la vis d'alimentation forcée augmente et la vitesse de rotation de la vis tampon est augmentée quand la charge de la vis d'alimentation forcée est réduite.

14. Procédé selon l'une quelconque des revendications 11 à 13, dans lequel la distance entre un point extérieur extrême d'un dernier filet de vis de la vis d'alimentation forcée, vue dans la direction de l'axe longitudinal de la vis d'alimentation forcée et un point sur le diamètre extérieur de la vis tampon à la section d'entrée de l'alimenteur à vis tampon est de 0-90 mm.

1000

Fig. 1

Fig 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013126007 A1
- WO 2015178828 A1

- WO 2013126007 A